# DEMANDE DE BREVET EUROPEEN

(11) **EP 2 112 811 A1**
(43) Date de publication de la demande: **28.10.2009**
(21) Numéro de dépôt: 09158768.3
(22) Date de dépôt: 24.04.2009
(51) Int. Cl.: H04M 3/42

(54) **Procédé et dispositif de fourniture à un appelé d'informations relatives à un appelant, sans décrochage**

(30) Priorité: 25.04.2008 FR 0852780
(71) Demandeur: Alcatel Lucent, 75008 Paris (FR)
(72) Inventeur: Litteaut, Jacques, 78160, MARLY LE ROI (FR); Rey, Jean-François, 29228, BREST (FR); Coulon, Stéphane, 92707, COLOMBES (FR)
(74) Mandataire: Sciaux, Edmond

(57) **Abrégé**

Un procédé est dédié à la fourniture d'informations relatives à un appelant tentant d'établir, avec son terminal de communication (T1), une communication avec un terminal de communication (T2) d'un appelé qui ne le connaît pas. Ce procédé consiste i) à déterminer si le terminal (T1) de l'appelant est associé à un identifiant de communication connu, puis ii) dans la négative à demander à l'appelant des informations d'appelant relatives au moins à son nom, puis iii) à constituer un message d'information contenant certaines au moins des informations d'appelant obtenues, puis iv) à transmettre ce message d'information au terminal (T2) de l'appelé concerné.

## Description

L'invention concerne le domaine des communications téléphoniques entre appelants et appelés, et plus précisément la fourniture à un appelé d'informations relatives à un appelant qui tente de le joindre et dont l'identifiant de communication est inconnu.

On entend ici par « identifiant de communication inconnu » un identifiant de communication qui est maintenu secret par l'appelant ou qui n'est pas connu de l'appelé.

Lorsqu'un identifiant de communication d'un appelant est inconnu d'un appelé, ce dernier peut être tenté de refuser la communication. Dans ce cas, l'appelant est dans l'incapacité de joindre immédiatement l'appelé. Il peut cependant lui être offert la possibilité d'enregistrer auprès d'un serveur vocal de l'appelé un message audio contenant ses coordonnées et l'objet de son appel, si le serveur ou le terminal de communication de l'appelé contient une application de téléphonie chargée d'analyser les identifiants de communication des appels entrant.

Une solution alternative a été proposée par certains opérateurs de télécommunication pour un usage résidentiel. Elle consiste à mettre en oeuvre une application de téléphonie chargée, lorsque l'identifiant de communication d'un appelant est maintenu secret, de demander à cet appelant d'enregistrer un message vocal (audio), puis d'établir une communication avec le terminal de l'appelé afin de lui transmettre ce message vocal enregistré que ce dernier peut alors écouter. Après avoir transmis le message vocal, l'application de téléphonie laisse le choix à l'appelé de raccrocher s'il ne désire pas prendre l'appel ou de rester en ligne auquel cas l'appel lui est transmis. L'inconvénient principal de cette solution réside dans le fait qu'un message vocal enregistré ne peut être écouté par un appelé qu'à condition, d'une part, que le terminal de l'appelé ne soit pas déjà impliqué dans une communication, et d'autre part, que l'appelé accepte de (ou puisse) décrocher rapidement. En effet, le message vocal ne peut être écouté qu'à condition que l'appelant « décroche » immédiatement. Or, il arrive fréquemment, notamment dans un environnement d'entreprise, qu'un appelé soit impliqué dans une communication ou participe à une réunion (ou conférence) au moment où l'application de téléphone lui transmet un message vocal enregistré, si bien que ce dernier a été enregistré pour rien.

L'invention a donc pour but d'améliorer la situation, et plus particulièrement de fournir à un appelé, sans qu'il ne décroche, des informations relatives à un appelant inconnu qui tente de le joindre.

Elle propose à cet effet un procédé, dédié à la fourniture d'informations sur un appelant inconnu, et consistant, lorsqu'un terminal de communication d'un appelant veut établir une communication téléphonique avec un terminal de communication d'un appelé :
i) à déterminer si le terminal de l'appelant est associé à un identifiant de communication connu, puis
ii) dans la négative à demander à l'appelant des informations d'appelant relatives au moins à son nom, puis
iii) à constituer un message d'information contenant certaines au moins des informations d'appelant obtenues, puis
iv) à transmettre ce message d'information à destination d'un terminal de l'appelé, en fonction d'au moins une règle définie par ledit appelé.

Le procédé selon l'invention peut comporter d'autres caractéristiques qui peuvent être prises séparément ou en combinaison, et notamment :
- au ii) on peut demander à l'appelant des informations d'appelant qui sont également relatives à la langue qu'il veut utiliser et/ou à l'objet de sa communication téléphonique et/ou à son prénom;
- au ii) on peut demander à l'appelant les informations d'appelant au moyen de questions générées par un service vocal interactif. Ce dernier peut par exemple être hébergé dans un serveur informatique ou dans le terminal de l'appelant ;
- au ii), en présence d'un identifiant de communication inconnu, on peut stocker ce dernier en correspondance de certaines au moins des informations d'appelant obtenues ;
- au iii) on peut générer un message audio avec certaines au moins des informations d'appelant, et on peut constituer un message d'information auquel on attache ce message audio généré de manière à permettre à l'appelé d'écouter ce message audio s'il le désire ;
- en variante, au iii) on peut générer un message audio avec certaines au moins des informations d'appelant puis on peut stocker ce message audio dans un serveur informatique et le référencer avec un identifiant de message. Dans ce cas, on peut constituer un message d'information qui contient l'identifiant de message choisi de manière à permettre à l'appelé de télécharger et d'écouter ce message audio s'il le désire ;
- au iii) on peut constituer un message d'information de format choisi parmi (au moins) XML et VXML et décrivant les informations collectées sous une forme de fichier audio et/ou sous une forme de chaînes de caractères (grâce à l'utilisation par le service vocal interactif d'une technologie de reconnaissance de parole) ;
- au iv) on peut procéder à la transmission du message d'information en fonction d'au moins une règle définie par l'appelé ;
- au iv), en présence d'une règle ordonnant un transfert de communication vers une messagerie, on peut transmettre le message d'information à cette messagerie de sorte qu'il puisse être stocké en vue d'être ultérieurement affiché et/ou diffusé de façon sonore par le terminal de l'appelé consécutivement à une connexion à la messagerie.

L'invention propose également un dispositif, dédié à la fourniture d'informations sur un appelant inconnu, et comprenant :
- des moyens d'analyse chargés, lorsqu'un terminal de communication d'un appelant veut établir une communication téléphonique avec un terminal de communication d'un appelé, de déterminer si ce terminal de l'appelant est associé à un identifiant de communication connu,
- des moyens d'interrogation chargés, lorsqu'une demande d'établissement de communication téléphonique n'est pas associée à un identifiant de communication connu, de demander à l'appelant des informations d'appelant relatives au moins à son nom, et
- des moyens de génération chargés, chaque fois que les moyens d'interrogation ont obtenu des informations d'appelant, de constituer un message d'information contenant certaines au moins de ces informations d'appelant, et d'ordonner la transmission de ce message d'information à destination d'un terminal de l'appelé concerné, en fonction d'au moins une règle définie par ledit appelé.

Le dispositif selon l'invention peut comporter d'autres caractéristiques qui peuvent être prises séparément ou en combinaison, et notamment :
- ses moyens d'analyse peuvent être agencés pour consulter un ou plusieurs annuaires informatiques, qu'ils soient personnels à l'appelé ou qu'ils appartiennent à l'entreprise dont l'appelé est un employé ;
- ses moyens d'interrogation peuvent être chargés de demander à l'appelant des informations d'appelant qui sont également relatives à la langue qu'il veut utiliser et/ou à l'objet de sa communication téléphonique et/ou à son prénom ;
- ses moyens d'interrogation peuvent comprendre un service vocal interactif chargé de demander à l'appelant les informations d'appelant au moyen de questions audio. Un tel service vocal interactif peut par exemple être hébergé dans un serveur informatique (faisant éventuellement partie du dispositif) ou dans le terminal de l'appelé ;
- ses moyens d'interrogation peuvent être chargés, en présence d'un identifiant de communication inconnu, de stocker ce dernier, dans des premiers moyens de stockage, en correspondance de certaines au moins des informations d'appelant obtenues ;
- ses moyens de génération peuvent être chargés de générer un message audio avec certaines au moins des informations d'appelant, et d'attacher un message audio généré à un message d'information de manière à permettre à l'appelé concerné d'écouter ce message audio s'il le désire ;
- en variante, ses moyens de génération peuvent être chargés de générer un message audio avec certaines au moins des informations d'appelant, puis de stocker ce message audio dans des seconds moyens de stockage à une adresse accessible via un identifiant de communication, et de constituer un message d'information contenant cet identifiant de communication de l'adresse des seconds moyens de stockage, de manière à permettre à l'appelé d'écouter ce message audio s'il le désire ;
- ses moyens de génération peuvent être chargés de constituer un message d'information de format choisi parmi (au moins) XML et VXML et décrivant les informations collectées sous une forme de fichier audio et/ou sous une forme de chaînes de caractères (grâce à l'utilisation par le service vocal interactif d'une technologie de reconnaissance de parole).

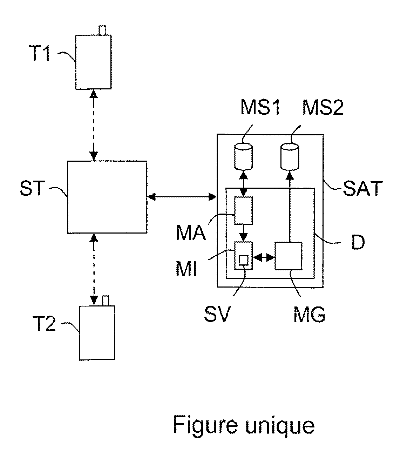

D'autres caractéristiques et avantages de l'invention apparaîtront à l'examen de la description détaillée ci-après, et du dessin annexé, sur lequel l'unique figure illustre de façon très schématique et fonctionnelle un serveur de télécommunication auquel sont couplés des terminaux d'appelant et d'appelé et un serveur de média équipé d'un exemple de réalisation d'un dispositif de fourniture d'informations selon l'invention. Le dessin annexé pourra non seulement servir à compléter l'invention, mais aussi contribuer à sa définition, le cas échéant.

L'invention a pour objet de permettre la fourniture à un appelé, sans qu'il ne décroche son terminal (de communication), d'informations relatives à un appelant qui tente de le joindre avec un terminal (de communication) dont l'identifiant de communication est inconnu.

On considère dans ce qui suit, à titre d'exemple non limitatif, que les terminaux (de communication) T1 et T2, respectivement de l'appelant et de l'appelé, sont des téléphones filaires d'entreprise fonctionnant sur IP (« Internet Protocol »). Mais, l'invention n'est pas limitée à ce type de terminal de communication. Elle concerne en effet tout type de terminal de communication, filaire ou non filaire, permettant à une personne de communiquer de façon téléphonique avec une autre personne équipée d'un autre terminal de communication (éventuellement d'un type différent). Par conséquent, il pourra également s'agir d'un téléphone mobile, d'un ordinateur fixe ou portable, ou d'un assistant numérique personnel (ou PDA), équipé d'un module de communication téléphonique adapté à la communication de données (par exemple sur IP).

Par ailleurs, on considère dans ce qui suit, à titre d'exemple non limitatif, que l'appelé est un salarié d'une entreprise disposant d'un serveur de télécommunications ST auquel son téléphone d'entreprise (IP) T2 est couplé, directement (par exemple via un réseau privé, éventuellement de type Intranet) ou indirectement (par exemple via un réseau de communication non filaire), et que l'appelant est une personne externe à l'entreprise et pourvue d'un téléphone mobile T1 pouvant se connecter indirectement au serveur de télécommunications ST (par exemple via un réseau de communication public).

L'invention propose de mettre en oeuvre un procédé permettant de fournir à un appelé des informations relatives à un appelant qui veut établir une communication téléphonique avec lui mais dont il ne connaît pas l'identifiant de terminal, parce que l'appelant demande la confidentialité au réseau téléphonique ou parce que l'appelé ne reconnaît pas l'identifiant de terminal fourni.

Ce procédé comprend quatre étapes principales qui peuvent par exemple être mises en oeuvre au moyen d'un dispositif D du type de celui qui est illustré (de façon non limitative) sur l'unique figure.

Dans cet exemple non limitatif, le dispositif D est implanté dans un serveur d'application(s) de télécommunication SAT qui est externe au serveur de télécommunications ST de l'entreprise, et couplé à ce dernier par une interface de routage et par une interface combinant signalisation d'appel et flux média. Mais, un tel dispositif D pourrait être intégré au serveur de télécommunications ST. Le dispositif D pourrait également être hébergé dans le terminal de l'appelé.

Une première étape principale du procédé (i) consiste, lorsqu'un terminal T1 d'un appelant veut établir une communication téléphonique avec un terminal T2 d'un appelé, à déterminer si ce terminal T1 de l'appelant est associé à un identifiant de communication connu.

On comprendra que la demande d'établissement d'appel du terminal T1 de l'appelant parvient au niveau du serveur de télécommunications ST, qui est chargé de traiter les appels impliquant le terminal T2 de l'appelé qui est rattaché (couplé) à lui. Le serveur d'application(s) de télécommunication SAT est enregistré auprès du serveur de télécommunications ST afin que ce dernier effectue une demande de routage auprès du premier pour qu'il la communique au dispositif D afin qu'il analyse des identifiants de l'appelant présents dans la demande d'établissement d'appel.

Le dispositif D comprend un module d'analyse MA qui est chargé de déterminer si une demande d'établissement d'appel (ou de communication), routée par le serveur de télécommunications ST, est associée à un identifiant de communication qui est connu ou inconnu de l'appelé. Pour ce faire, il accède à des premiers moyens de stockage MS1 dans lesquels se trouvent stockés des identifiants de communication (associés à des salariés de l'entreprise) en correspondance d'identifiants de communication (associés à des personnes externes à l'entreprise mais connus de certains de ses salariés).

Tout type d'identifiant de communication est ici concerné, et notamment les numéros de téléphone et les adresses de type URL.

On comprendra que les premiers moyens de stockage MS1 stockent ainsi un ou plusieurs annuaires informatiques personnels aux appelés ou appartenant à l'entreprise dont les appelés sont des employés.

Ces premiers moyens de stockage MS1 peuvent se présenter sous toute forme connue de l'homme de l'art, et notamment sous la forme d'une mémoire ou d'une base de données.

Dans l'exemple non limitatif illustré, les premiers moyens de stockage MS1 sont implantés dans le serveur d'application(s) de télécommunication SAT. On notera que dans une variante, les premiers moyens de stockage MS1 pourraient faire partie du dispositif D.

Si le module d'analyse MA s'aperçoit que la demande d'établissement d'appel (ou de communication) est associée à un identifiant de communication qui est maintenu secret, il avertit son dispositif D. Ce dernier envoie alors une réponse de routage au serveur de télécommunications ST afin qu'il transmette la demande d'établissement d'appel à un module d'interrogation MI (du dispositif D), qui est en charge de la mise en oeuvre de la deuxième étape principale du procédé

Si le module d'analyse MA s'aperçoit que la demande d'établissement d'appel (ou de communication) est associée à un identifiant de communication qui n'est pas maintenu secret, il accède aux premiers moyens de stockage MS1 afin de déterminer dans le(s) annuaire(s) si cet identifiant de communication d'appelant est stocké en correspondance de l'identifiant de communication de l'appelé.

Dans l'affirmative, le module d'analyse MA le signale à son dispositif D qui demande alors au serveur de télécommunications ST de router la demande d'établissement d'appel classiquement. Ce dernier (ST) l'achemine alors vers l'appelé en tenant compte d'éventuelles règles que ce dernier a préalablement fixées et qu'il stocke, comme par exemple une règle ordonnant le transfert de toute (ou seulement certaines) communication(s) vers une messagerie ou vers une autre personne.

On notera que le dispositif D peut éventuellement inclure dans la réponse de routage des informations connues relatives à l'appelant (comme par exemple son nom) afin qu'elles enrichissent la demande d'appel.

Dans la négative, le module d'analyse MA avertit son dispositif D afin qu'il demande au serveur de télécommunications ST de router la demande d'établissement d'appel vers un module d'interrogation MI du dispositif D, qui est en charge de la mise en oeuvre de la deuxième étape principale du procédé.

La deuxième étape principale du procédé (ii) consiste à demander à l'appelant des informations d'appelant qui sont relatives au moins à son nom (de famille).

Il est important de noter qu'il est avantageux de demander également à l'appelant d'autres informations d'appelant, comme par exemple des informations relatives à la langue qu'il veut utiliser et/ou à l'objet de sa communication téléphonique et/ou à son prénom.

De préférence, les informations d'appelant sont demandées à l'appelant au moyen de questions qui sont générées par un service vocal interactif, qui est par exemple mis en oeuvre par un serveur informatique SV. Comme illustré, un tel serveur informatique SV peut par exemple faire partie du module d'interrogation MI du dispositif D. Mais, dans une variante, il pourrait faire partie du serveur d'application(s) de télécommunication SAT et être couplé au dispositif D. On notera que le service vocal interactif pourrait également être hébergé par le terminal T2 de l'appelé.

Le module d'interrogation MI est chargé d'adresser au terminal T1 de l'appelant, via le serveur de télécommunications ST, au moins une question basique prédéfinie, générée (ici) par le service vocal interactif (ici implanté dans le serveur informatique SV). Par exemple, il peut lui adresser la question « quel est votre nom ? », ainsi qu'éventuellement les questions « quel est votre prénom ? » et/ou « quel est l'objet de votre appel ? » et/ou « quelle langue souhaitez vous utiliser? ». Après chaque question, le module d'interrogation MI attend pendant quelques instants (par exemple trois ou cinq secondes) que l'appelant lui réponde. Chaque réponse de l'appelant est analysée par un module de reconnaissance de paroles (ou ASR (pour « Automatic Speech Recognition »)) du serveur vocal interactif SV.

On notera qu'à ce stade on peut envisager de stocker l'identifiant de communication inconnu en correspondance de certaines au moins des informations d'appelant qui ont été obtenues, et notamment le nom et le prénom et/ou la langue souhaitée. Ce stockage peut par exemple se faire à l'initiative du module d'interrogation MI dans les premiers moyens de stockage MS1.

On comprendra que les informations d'appelant pourront être réutilisées par le serveur d'application(s) de télécommunication SAT lors de futurs appels afin de signaler à un appelé le nom (et le prénom et/ou la langue) de l'appelant en compagnie de son numéro de téléphone ou à la place de ce dernier.

Mais, le stockage précité peut être éventuellement subordonné à l'autorisation de l'appelé ou à son acceptation ou son refus de répondre à l'appelant.

Une troisième étape principale du procédé (iii) consiste à constituer un message d'information contenant certaines au moins des informations d'appelant obtenues lors de la deuxième étape principale (d'interrogation).

Le message d'information qui est constitué peut par exemple être de format XML (« eXtended Markup Language ») ou VXML (« Voice XML »).

Cette troisième étape est par exemple mise en oeuvre par un module de génération MG que comprend le dispositif D et qui est couplé à son module d'interrogation MI.

Il est important de noter qu'un message d'information peut être de type textuel et/ou audio. Il peut par exemple se présenter sous la forme d'une phrase du type « Mr Bruno Dupont souhaite discuter avec vous en français à propos du dossier XY ». Cette phrase peut être définie par des données de texte et/ou des données audio obtenues par synthèse vocale, par exemple au moyen du serveur informatique SV.

Ainsi, lorsque le module de génération MG reçoit du module d'interrogation MI les informations d'appelant qu'il a obtenues (ou collectées), il peut par exemple générer un message textuel avec certaines au moins des informations d'appelant obtenues, et ordonner la transmission de ce message textuel à l'appelé.

Dans une première variante, le module de génération MG peut générer un message audio (en collaboration avec le serveur informatique SV) avec certaines au moins des informations d'appelant obtenues, et ordonner la transmission de ce message textuel à l'appelé.

Dans une deuxième variante, le module de génération MG peut générer un message textuel avec certaines au moins des informations d'appelant obtenues, puis un message audio (en collaboration avec le serveur informatique SV) avec également certaines au moins des informations d'appelant obtenues. Puis, il peut par exemple former un fichier audio avec ce message audio afin d'attacher ce fichier au message textuel. Et finalement il ordonne la transmission de ce message textuel et du fichier attaché à l'appelé.

Dans une troisième variante, le module de génération MG peut générer un message audio (en collaboration avec le serveur informatique SV) avec certaines au moins des informations d'appelant obtenues. Puis, il peut par exemple stocker ce message audio dans des seconds moyens de stockage MS2 d'un serveur informatique en le référençant avec un identifiant de message. Puis, il peut constituer un message textuel contenant cet identifiant de message choisi et signalant qu'un message audio complet est accessible à cette adresse de message, et contenant éventuellement certaines au moins des informations d'appelant obtenues. Et finalement il ordonne la transmission de ce message textuel à l'appelé, de manière à lui permettre de télécharger et d'écouter le message audio complet.

Les seconds moyens de stockage MS2 précités peuvent se présenter sous toute forme connue de l'homme de l'art, et notamment sous la forme d'une mémoire ou d'une base de données. Par exemple, et comme illustré, ils peuvent faire partie du serveur d'application(s) de télécommunication SAT. Mais, dans une variante, ils pourraient faire partie du dispositif D.

On notera que le rendu pour l'appelé du contenu du message d'information (textuel et/ou audio) peut éventuellement dépendre des capacités connues du terminal T2 de l'appelé.

Une quatrième étape principale du procédé (iv) consiste à transmettre le message d'information (ainsi que l'éventuel fichier audio attaché) au terminal T2 de l'appelé afin qu'il affiche sur un écran qu'il comprend et/ou diffuse de façon sonore au moyen d'un haut-parleur qu'il comprend les informations d'appelant qui sont contenues dans ce message d'information (et l'éventuel fichier audio attaché).

Cette transmission du message d'information se fait via le serveur de télécommunications TS sur ordre du dispositif D après décision du module de génération MG.

En fait, le dispositif D peut par exemple compléter la demande d'établissement d'appel avec un message d'information qui comportent des données relatives aux informations obtenues par le module d'interrogation MI, puis il la retransmet au serveur de télécommunications ST afin qu'il l'achemine vers l'appelé en tenant compte d'éventuelles règles que ce dernier a préalablement fixées et qu'il stocke, comme par exemple une règle ordonnant le transfert de toute (ou seulement certaines) communication(s) vers une messagerie ou vers une autre personne.

Le terminal de l'appelé T2 dispose d'un module de communication permettant au moins d'afficher sur son écran un message textuel signalant qu'un message d'information est disponible pour la consultation, et dans le meilleur des cas permettant d'afficher sur son écran un contexte graphique enrichi, avec description du contexte de la communication en cours, et du message d'information ; et possibilité pour l'appelé d'indiquer s'il souhaite écouter le message d'information en audio avant de décider de prendre l'appel.

Il est particulièrement important de noter que l'affichage (textuel) et/ou la diffusion (audio) se fait (font) sans que l'appelé n'ait à décrocher ou à interrompre une autre communication déjà en cours. Par conséquent, l'appelé peut être informé alors même qu'il est impliqué dans une communication ou alors même qu'il s'est absenté quelques instants (si l'on maintient l'affichage pendant un certain temps, voire même tant que l'appelé n'agit pas sur son terminal T2).

On notera que l'appelé peut lire et/ou entendre le contenu informatif du message d'information reçu (et du message audio contenu dans l'éventuel fichier attaché) tout en ayant accès aux fonctionnalités nominales de son terminal T2, comme par exemple, dans le cas d'un terminal d'entreprise, des fonctionnalités de traitement d'un appel telles que l'acceptation, le refus, la mise en attente, le routage vers une autre destination, et analogues.

Tous les cas de traitement d'appel qui suivent la présentation du message d'information peuvent bénéficier de ce dernier. Ainsi, on peut par exemple stocker le message d'information dans la messagerie de l'appelé (qui est a priori découplée du serveur informatique SV du dispositif D) afin de lui permettre d'accéder de nouveau à son contenu informatif ultérieurement.

On notera également que lorsque le message d'information reçu contient un identifiant de communication d'une adresse des seconds moyens de stockage MS2 où se trouve stocké un message audio complet, l'appelé peut rapatrier ce message audio en composant cet identifiant de communication (ou éventuellement en cliquant dessus).

On comprendra qu'en présence d'une règle ordonnant le transfert des communications vers une messagerie, définie et activée par l'appelé auprès du serveur de télécommunications ST, le message d'information est transmis à la messagerie de l'appelé de sorte qu'il puisse être stocké. L'appelé sera alors informé de l'existence d'un message d'information lorsqu'il accédera à sa messagerie, et il pourra s'il le souhaite afficher et/ou diffuser de façon sonore son contenu informatif avec son terminal T2, voire même récupérer automatiquement un éventuel message audio stocké dans les seconds moyens de stockage MS2 à l'adresse correspondant à l'identifiant de communication contenu dans ce message d'information.

Le dispositif de fourniture d'informations d'appelant D selon l'invention, et notamment ses modules d'analyse MA, module d'interrogation MI et module de génération MG, peuvent être réalisés sous la forme de circuits électroniques, de modules logiciels (ou informatiques), ou d'une combinaison de circuits électroniques et de modules logiciels.

L'invention ne se limite pas aux modes de réalisation de dispositif de fourniture d'informations d'appelant, de serveur de média et de procédé de fourniture d'informations d'appelant décrits ci-avant, seulement à titre d'exemple, mais elle englobe toutes les variantes que pourra envisager l'homme de l'art dans le cadre des revendications ci-après.

## Revendications

1. Procédé de fourniture d'informations relatives à un appelant inconnu, **caractérisé en ce qu'**il consiste, lorsqu'un terminal de communication (T1) d'un appelant veut établir une communication téléphonique avec un terminal de communication (T2) d'un appelé,
i) à déterminer si ledit terminal (T1) de l'appelant est associé à un identifiant de communication connu,
puis ii) dans la négative à demander audit appelant des informations d'appelant relatives au moins à son nom,
puis iii) à constituer un message d'information contenant certaines au moins desdites informations d'appelant obtenues,
puis iv) à transmettre ledit message d'information à destination d'un terminal (T2) de l'appelé ;
**caractérisé en ce qu'**on transmet ledit message en fonction d'au moins une règle définie par ledit appelé.

2. Procédé selon !a revendication 1, **caractérisé en ce qu'**au ii) on demande audit appelant des informations d'appelant relatives également à la langue utilisée et/ou à l'objet de la communication téléphonique et/ou à son prénom.

3. Procédé selon l'une des revendications 1 à 2, **caractérisé en ce qu'**au ii) on demande audit appelant les informations d'appelant au moyen de questions générées par un service vocal interactif.

4. Procédé selon l'une des revendications 1 à 3, **caractérisé en ce qu'**au ii), en présence d'un identifiant de communication inconnu, on stocke ce dernier en correspondance de certaines au moins desdites informations d'appelant obtenues.

5. Procédé selon l'une des revendications 1 à 4, **caractérisé en ce qu'**au iii) on génère un message audio avec certaines au moins desdites informations d'appelant, et on constitue un message d'information auquel on attache ledit message audio généré de manière à permettre audit appelé d'écouter ledit message audio s'il le désire.

6. Procédé selon l'une des revendications 1 à 4, **caractérisé en ce qu'**au iii) on génère un message audio avec certaines au moins desdites informations d'appelant puis on stocke ce message audio dans un serveur informatique en le référençant avec un identifiant de message, et on constitue un message d'information contenant ledit identifiant de message choisi de manière à permettre audit appelé de télécharger et d'écouter ledit message audio s'il le désire.

7. Procédé selon l'une des revendications 1 à 6**, caractérisé en ce qu'**au iii) on constitue un message d'information de format choisi dans un groupe comprenant au moins XML et VXML et décrivant les informations collectées sous une forme de fichier audio et/ou sous une forme de chaînes de caractères.

8. Procédé selon la revendication 7, **caractérisé en ce qu'**au iv), en présence d'une règle ordonnant un transfert de communication vers une messagerie, on transmet ledit message d'information à ladite messagerie de sorte qu'il puisse être stocké en vue d'être ultérieurement affiché et/ou diffusé de façon sonore par ledit terminal (T2) de l'appelé consécutivement à une connexion à ladite messagerie.

9. Dispositif de fourniture d'informations relatives à un appelant inconnu, comprenant :
i) des moyens d'analyse (MA) agencés, lorsqu'un terminal de communication (T1) d'un appelant veut établir une communication téléphonique avec un terminal de communication (T2) d'un appelé, pour déterminer si ledit terminal (T1) de l'appelant est associé à un identifiant de communication connu,
ii) des moyens d'interrogation (MI) agencés, lorsqu'une demande d'établissement de communication téléphonique n'est pas associée à un identifiant de communication connu, pour demander audit appelant des informations d'appelant relatives au moins à son nom,
et
iii)des moyens de génération (MG) agencés, chaque fois que lesdits moyens d'interrogation (MI) ont obtenu des informations d'appelant, pour constituer un message d'information contenant certaines au moins de ces informations d'appelant, et pour ordonner la transmission dudit message d'information à destination d'un terminal (T2) de l'appelé concerné ;
**caractérisé en ce que** les moyens pour ordonner la transmission dudit message d'information à destination d'un terminal (T2) de l'appelé concerné comportent des moyens pour ordonner la transmission en fonction d'au moins une règle définie par ledit appelé.

10. Dispositif selon la revendication 11, **caractérisé en ce que** lesdits moyens d'analyse (MA) sont agencés pour consulter un ou plusieurs annuaires informatiques personnels à l'appelé ou appartenant à une entreprise dont l'appelé est un employé.

11. Dispositif selon l'une des revendications 11 et 12, **caractérisé en ce que** lesdits moyens d'interrogation (MI) sont agencés pour demander audit appelant des informations d'appelant relatives également à la langue utilisée et/ou à l'objet de la communication téléphonique et/ou à son prénom.

12. Dispositif selon l'une des revendications 11 à 13, **caractérisé en ce que** lesdits moyens d'interrogation (MI) comprennent un service vocal interactif agencé pour demander audit appelant lesdites informations d'appelant au moyen de questions audio.

13. Dispositif selon la revendication 14, **caractérisé en ce que** lesdits moyens d'interrogation (MI) comprennent un serveur informatique (SV) hébergeant ledit service vocal interactif.

14. Dispositif selon l'une des revendications 11 à 15, **caractérisé en ce que** lesdits moyens d'interrogation (MI) sont agencés, en présence d'un identifiant de communication inconnu, pour stocker ce dernier, dans des premiers moyens de stockage (MS1), en correspondance de certaines au moins desdites informations d'appelant obtenues.

15. Dispositif selon l'une des revendications 11 à 16, **caractérisé en ce que** lesdits moyens de génération (MG) sont agencés pour générer un message audio avec certaines au moins desdites informations d'appelant, et pour attacher un message audio généré à un message d'information de manière à permettre à l'appelé concerné d'écouter ledit message audio s'il le désire.

16. Dispositif selon l'une des revendications 11 à 16, **caractérisé en ce que** lesdits moyens de génération (MG) sont agencés pour générer un message audio avec certaines au moins desdites informations d'appelant, puis pour stocker ce message audio dans des seconds moyens de stockage (MS2) à une adresse accessible via un identifiant de communication, et pour constituer un message d'information contenant ledit identifiant de communication de l'adresse desdits seconds moyens de stockage (MS2), de manière à permettre audit appelé d'écouter ledit message audio s'il le désire.

17. Dispositif selon l'une des revendications 10 à 15, **caractérisé en ce que** lesdits moyens de génération (MG) sont agencés pour constituer un message d'information de format choisi dans un groupe comprenant au moins XML et VXML et décrivant les informations collectées sous une forme de fichier audio et/ou sous une forme de chaînes de caractères.

## Revendications modifiées

### Revendications modifiées conformément à la règle 137(2) CBE.

**1.** A method of forwarding a call in a network, said method comprising steps of:
comparing (304) parameters of Session Description Protocol (SDP) received with call forwarding parameter of receiving end (109); and
forwarding (306) said can to a second terminal (110), as specified in said call forwarding parameters, if at least one of said SDP parameters match with said call forwarding parameter,
sending (502) a REFER message to network of calling end (101), wherein said REFER message comprises part of said SDP to be forwarded and an identifier for said second terminal (110), wherein part of said SDP to be forward is determined by profile of said receiving end (109) and said SDP, on obtaining a match between at least one of said SDP parameters and said call forwarding parameters; and
initiating (505, 509, 511) a call to said second terminal, on receipt of said REFER message.

**2.** A method as claimed in said call is forwarded partially to a plurality of terminals, said method comprising steps of
comparing (802) parameters of SDP with call forwarding parameter of said receiving end (109); and
sending (804, 810) a plurality of REFER messages to net work of calling end (101); wherein number of said REFER messages is equal to number of terminals to which the call has to be partially forwarded, wherein said REFER, message comprises part of said SDP to be forwarded and an identifier for said terminal, wherein part of said SDP to be forwarded is determined by profile of said receiving end (109) and said SDP on obtaining a match between at least one of said SDP parameters and said call forwarding parameters; and
initiating (807,811) a can to said terminals, on receipt of said REFER message,

**3.** A method, as claimed in claim 1, wherein said telecommunications network is a Session Initiation Protocol (SIP)-based network.

**4.** A method, as claimed in claim 1, wherein said method is performed by an application server.

**5.** A method, as claimed in claim 1, wherein said method is performed by a Serving-Call Session Control Function (S-CSCF),

**6.** A method, as claimed in claim 1, wherein said method is performed by a proxy server of said user.

**7.** A call forwarding system in a network, said system comprising at least one means adapted to:
comparing (304) parameters of Session Description Protocol (SDP) with call forwarding parameters of receiving end (109); and
forwarding (306) said call to a second terminal (110), as specified in said call forwarding parameters, if at least one of said SDP parameters match with said call forwarding parameters
sending (502) a REFER message to network of calling end (101), wherein said REFER message comprises part of said SDP to be forwarded and an identifier for said second terminal (110), wherein part of said SDP to be forwarded is determined by comparing profile of said receiving end (109) and said SDP, on obtaining a match between at least one of said SDP parameters and said call forwarding parameters; and
initiating (505, 509, 511) a call to said second terminal, on receipt of said REFER message.

**8.** A call forwarding system, as claimed in claim 7, wherein said system performs partial forwarding of said calls to a plurality of terminals, said system further comprising at least one means adapted to:
sending (804, 810) a plurality of REFER messages to network of calling end (101); wherein number of said REFER messages is equal to number of terminals to which calls have to be forwarded, wherein said REFER message comprises of said SDP to be forwarded and an identifier said terminals, wherein part said SDP to be forwarded is determined profile of said receiving end (109) and said SDP, on obtaining a match between at least one of said SDP parameters and call forwarding parameters; and
initiating (807, 811) sessions said terminals, on receipt of said REFER messages.

**9.** A module adapted to perform call forwarding, said module comprising at least one means adapted to
taking (304) a decision if call forwarding has to be done, after matching SDP parameters;
sending (502) a REFER message to network of casing user, if call forwarding is partial and is media based; and
sending (804, 810) a plurality of REFER messages to network of calling user, if call forwarding is partial to multiple users and is media based.
